# EUROPÄISCHE PATENTSCHRIFT

(11) **EP 2 347 234 B1**
(45) Veröffentlichungstag und Bekanntmachung des Hinweises auf die Patenterteilung: **24.01.2018**
(21) Anmeldenummer: 09748783.9
(22) Anmeldetag: 09.11.2009
(51) Int. Cl.: G01K 7/02, G01K 7/16, B23K 26/22, H01R 4/50, H01R 13/66, H01R 43/02

(54) **VORRICHTUNG ZUR BESTIMMUNG UND/ODER ÜBERWACHUNG EINER PROZESSGRÖßE**
DEVICE FOR DETERMINING AND/OR MONITORING A PROCESS VARIABLE
PROCÉDÉ POUR DÉTERMINER ET/OU SURVEILLER UN PARAMÈTRE DE PROCÉDÉ

(30) Priorität: 19.11.2008 DE 102008043862; 20.05.2009 DE 102009026402
(43) Veröffentlichungstag der Anmeldung: 27.07.2011
(73) Patentinhaber: Endress+Hauser Wetzer GmbH+Co. KG, 87484 Nesselwang (DE)
(72) Erfinder: BOGHUN, Dirk, 81245 München (DE); ISELT, Torsten, 87435 Kempten (DE); DE GUZMANN, Larry, Singapore 609917 (PH)
(74) Vertreter: Andres, Angelika Maria
(86) Internationale Anmeldenummer: PCT/EP2009/064801
(87) Internationale Veröffentlichungsnummer: WO 2010/057793

(56) Entgegenhaltungen:
- EP-A1- 1 278 277
- EP-A1- 1 278 277
- DE-A1- 10 236 036
- DE-A1- 19 804 669
- DE-A1-102007 000 073

## Beschreibung

Die Erfindung bezieht sich auf eine Vorrichtung zur Bestimmung und/oder Überwachung mindestens einer Prozessgröße, mit mindestens einem Sensorelement, welches mit mindestens einer Anschlussleitung verbunden ist, und mit mindestens einem Leiterelement, welches mit der Anschlussleitung verbunden ist. Bei der Prozessgröße handelt es sich beispielsweise um Temperatur, Füllstand, Dichte, Durchfluss, Viskosität, Feuchtigkeit oder pH-Wert.

Industrielle Temperatur-Messgeräte oder die für die Messung relevanten Bestandteile werden insbesondere für höhere Einsatztemperaturen häufig unter Verwendung so genannter mineralisolierter Leitungen (eine andere Bezeichnung ist: Mantelleitungen) aufgebaut. Solche Leitungen enthalten, umgeben von einem Metallmantel, in ihrem Inneren zwei, vier oder auch mehr massive metallische Leiter aus Kupfer, Nickel, Nickelchrom o.ä., welche in ein sehr kompaktes Keramikpulver (MgO, Al₂O₃) eingebettet sind, welches die Leiter elektrisch isoliert. Eine solche mineralisolierte Leitung wird dann zum Aufbau eines Thermometer-Messeinsatzes auf die entsprechende Länge gebracht. Die Innenleiter werden auf einer gewissen Länge freigelegt. Dann wird ein entsprechendes Temperatur-Sensorelement (z.B. ein Pt 100) passend in Zwei-, Drei- oder Vierleiterschaltung hart angelötet oder angeschweißt und dann mittels zusätzlichen Rohrstücken oder Metallkappen, die über das Sensorelement geschoben und an die Mantelleitung angeschweißt werden, verschlossen. Dieser Prozess, insbesondere das Anschweißen/Anlöten des Sensorelements an die Mantelleitungsdrähte ist allerdings kaum automatisierbar und wird üblicherweise in Handarbeit ausgeführt. Dies ist mit hohen Kosten verbunden.

Die Schwierigkeiten für eine Automatisierung liegen vor allem im definierten Ausrichten und präzisen Positionieren der relativ dicken Mantelleitungsdrähte und der deutlich dünneren Anschlussdrähten der Sensoren zueinander sowie deren Halterung, um eine ausreichend stabile Schweiß- oder Lötverbindung herstellen zu können. Dies gilt umso mehr für den Fall, dass - wie beispielsweise bei Widerstandsthermometer-Sensoren - in Drei- oder Vierleiterschaltung jeweils zwei der kontaktierenden Mantelleitungsdrähte zuvor definiert zueinander zu biegen sind, bevor sie mit dem dritten dünnen (Sensor-)draht verschweißt werden können.

Aus der DE19804669A1 ist es bekannt geworden, die Anschlussleitungen eines Sensorelements eines Gasmessfühlers mit einem in einer Metallmantelleitung geführten Verbindungsleiter mittels eines Kontaktelements zu kontaktieren. Die Verbindungsstelle ist in einem Kontaktgehäuse angeordnet, welches ein Verbindungselement umfasst, das mit der Anschlussleitung und dem Verbindungleiter kontaktierbar ist.

Bei dem in der DE10236036A1 offenbarten Hochtemperatursensor ist der Messwiderstand mit einer mechanischen Kapselung versehen und durch zugentlastete Messwiderstandsanschlussdrähte mit Innenleiterdrähten in mit einem elektrischen Anschluss verbunden sind.

Die DE102007000073A1 wiederum beschreibt einen Temperatursensor mit einem Thermistorelement mit einem Paar von Elektrodendrähten, einen Hülsenstift mit einem Paar von darin angebrachten Signaldrähten, welche mit den Elektrodendrähten verbunden sind. Die Elektrodendrähte werden mittels eines in einem isolierenden Halteelement verankerten Bindemittels zusammengeführt und fixiert.

Schließlich ist es aus der EP1278277A1 bekannt geworden, ein Kunststoffgehäuse um einen Anschlussbereich eines elektrischen Bauteils zu spritzen, wobei im Anschlussbereich das Leiterendstück eines Kabels angelötet oder angeschweißt wird. Hierzu wird das Kunststoffgehäuse zunächst mindestens um die noch anschlussfreie Kontaktstelle gespritzt, wobei ein freier Zugang bis zu derselben entsteht. Anschließend wird das Kabelende mit seinem Leiterendstück durch den freien Zugang eingesteckt und dann mit der Kontaktstelle laserverschweißt.

Der Erfindung liegt die Aufgabe zugrunde, eine Messvorrichtung der zuvor genannten Art vorzuschlagen, welches eine automatisierte Fertigung erlaubt.

Die Aufgabe wird erfindungsgemäß dadurch gelöst, dass mindestens ein Formteil vorgesehen ist, das zumindest teilweise aus einer Keramik besteht und im Wesentlichen zylindrisch ausgestaltet ist, dass in dem Formteil mindestens eine Öffnung zum Einführen der Anschlussleitung vorgesehen ist, dass in dem Formteil mindestens eine Öffnung zum Einführen des Leiterelements vorgesehen ist. In dem Formteil ist mindestens ein Raumabschnitt vorgesehen ist, auf welchen die Öffnung zum Einführen der Anschlussleitung und die Öffnung zum Einführen des Leiterelements münden, wobei die mindestens eine Anschlussleitung und das mindestens eine Leiterelement sich in dem Raumabschnitt treffen, und elektrisch und mechanisch verbunden sind.
Das hier beschriebene Formteil ist dabei nicht auf die Anwendung in einem Messgerät oder Feldgerät beschränkt, sondern kann auch in anderen Geräten Verwendung finden, in weichem zwei Elemente miteinander zu verbinden sind. Insbesondere gelten somit auch alle folgenden Ausgestaltungen nicht nur für solche Mess- oder Feldgeräte. In dem Formteil werden somit die Anschlussleitung und das Leiterelement zusammengebracht, wobei beide sich in einem Raumabschnitt treffen.

Eine Ausgestaltung sieht vor, dass die Öffnung zum Einführen der Anschlussleitung im Wesentlichen kegelförmig ausgestaltet ist, wobei die Spitze des Kegels im Raumabschnitt mündet. Ein solcher Kegel erleichtert das Einbringen der Anschlussleitung in den Formkörper.

Eine Ausgestaltung beinhaltet, dass die Öffnung zum Einführen des Leiterelements im Wesentlichen V-förmig ausgestaltet ist, wobei die Spitze
des Vs im Raumabschnitt mündet. Insbesondere ist die V-förmige Öffnung seitlich abgeflacht, so dass das Leiterelement seitlich nur ein geringes Spiel hat und das Leiterelement vorzugsweise nur entlang des Vs geführt wird.

Eine Ausgestaltung sieht vor, dass das Formteil mindestens eine Kontaktierungsöffnung aufweist, welche auf den Raumabschnitt mündet und durch welche hindurch das Anschlusselement und das Leiterelement, insbesondere durch Laserschweißen, miteinander verbindbar sind. Das Formteil hat somit eine weitere Öffnung, über welche das Verbinden realisierbar ist.

Eine Ausgestaltung beinhaltet, dass es sich bei der Kontaktierungsöffnung um eine Bohrung handelt, welcher von einer Außenfläche des Formteils bis in den Raumabschnitt reicht.

Eine Ausgestaltung sieht vor, dass das Leiterelement ein ein- oder mehradriges mineralisoliertes Kabel ist. Es handelt sich somit vorzugsweise um eine sog. Mantelleitung.

In einer Ausgestaltung ist das Anschlusselement und/oder das Leiterelement wenigstens abschnittsweise von einer Keramikfaser ummantelt. Die Ummantelung mit der Keramikfaser kann als Schutzschicht gegenüber prozess- und/oder umgebungsseitigen Störeinflüssen auf das Leiterelement bzw. das Anschlusselement dienen. Bevorzugt ist das Leiterelement und/oder das Anschlusselement dabei in eine elektrisch isolierende Schicht eingebetet, welche wenigstens teilweise von der Keramikfaser ummantelt ist.

Eine Ausgestaltung beinhaltet, dass das Leiterelement zumindest teilweise von der Ummantelung freigelegt ist. Zumindest in dem Bereich, in welchem die Verbindung mit der Anschlussleitung stattfindet, ist somit keine Ummantelung vorgesehen bzw. ist diese entfernt.

Eine Ausgestaltung sieht vor, dass das Formteil zumindest teilweise aus einer Keramik besteht.

Eine Ausgestaltung beinhaltet, dass das Formteil im Wesentlichen zylindrisch ausgestaltet ist.

Eine Ausgestaltung sieht vor, dass das Anschlusselement ein Draht ist.

Eine Ausgestaltung beinhaltet, dass das Sensorelement mindestens ein Temperatur-Widerstands-Element aufweist.

Eine Ausgestaltung sieht vor, dass das Sensorelement zumindest teilweise in einer Kappe eingebracht ist.

Eine Ausgestaltung beinhaltet, dass die Kappe zumindest teilweise mit dem Mantel des Leiterelements verbunden ist.

Eine Ausgestaltung sieht vor, dass das Sensorelement zumindest teilweise in einer Vergussmasse eingebettet ist.

Ein Verfahren zur Fertigung eines erfindungsgemäßen Temperaturmessgeräts umfasst somit in einer Ausgestaltung zumindest drei Arbeitsschritte, wobei es sich in diesem Beispiel bei der Vorrichtung um ein Temperaturmessgerät handelt:
Es werden sog. Sensormodule erzeugt, bei welchen Stahlkappen mit einem Keramikverguss definiert ausgefüllt werden, in welchem ein RTD-Sensorelement eingebettet ist und dieses fest umschließt. Hierdurch werden u.a. auch Position und Länge der freien Anschlussdrähte des Sensorelements fixiert.
Dann wird eine elektrische und mechanische Kopplung der RTD-Anschlussdrähte mit den freigelegten Leiterenden der Mantelleitung mit Hilfe des o.g. Keramikformteils durch Laserverschweißung erzeugt.

Abschließend wird die Sensorkappe mit dem äußeren Mantel der Mantelleitung verschweißt.

Das Keramikformteil ist von seiner Geometrie und Form dabei so ausgeführt, dass es insbesondere durch ein einfaches Zusammenschieben/-stecken sowohl die beispielsweise vier Anschlussdrähte der Mantelleitung V-förmig vorbiegt als auch das deutliche dünnere Anschlussdrähtchen des RTD-Elements so positioniert, dass sie danach einfach, insbesondere vollautomatisch per Laser durch das seitlich angebrachtes Loch miteinander verschweißt werden können.

Das Keramikformteil verbleibt weiterhin in dem fertigen Messeinsatz und dient somit sowohl als Füge- und Schweißwerkzeug als auch später zur elektrischen Isolation der Anschlussdrähte untereinander bzw. zum metallischen Mantel sowie zur mechanischen Stabilisierung und für eine ausreichende mechanische Festigkeit und Vibrationsresistenz der Verbindungsstelle zwischen Sensorelement und Mantelleitungsdrähten.

Die Erfindung wird anhand der nachfolgenden Zeichnungen näher erläutert. Es zeigt:
Fig. 1: eine Explosionsdarstellung eines Abschnitts eines erfindungsgemäßen Messgerätes,
Fig. 2: ein Schnitt durch einen Teil der Fig. 1,
Fig. 3a und 3b: ein Schnitt durch die Ausgestaltung der Fig. 2 und ein vergrößerter Bereich davon,
Fign. 4a und 4b: zwei unterschiedliche Blicke auf eine räumliche Darstellung eines Formteils,
Fig. 5: eine schematische Darstellung eines Mantelthermometers an einer Messstelle, und
Fig. 6: eine vergrößerte Darstellung der Schweißauflage und der daran befestigten Thermodrähte.

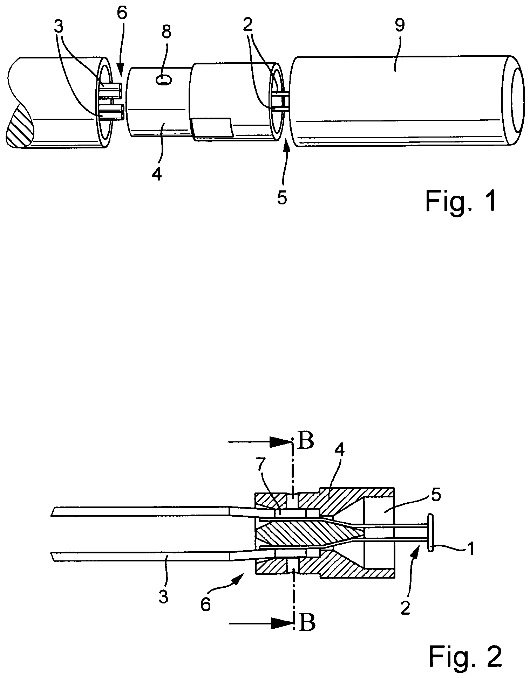

In der Fig. 1 ist der dem Medium bzw. dem Prozess zugewandte Endbereich eines erfindungsgemäßen Messgerätes mit einigen Bestandteilen dargestellt. In der Kappe 9 befindet sich - hier nicht sichtbar - das Sensorelement, welches beispielsweise der Messung der Temperatur dient, indem der temperaturabhängige elektrische Widerstand des Sensorelements ausgewertet wird.

Das Sensorelement ist hier mit zwei Anschlussleitungen 2 verbunden, welche aus einer in der Kappe 9 befindlichen Vergussmasse, bei welcher es sich beispielsweise um einen Keramikverguss handelt, herausragen. Die Anschlussleitungen 2, welche zumeist Drähte sind, werden im Formteil 4 an die zwei Leiterelemente 3 einer Mantelleitung herangeführt und mit diesen elektrisch und mechanisch beispielsweise mittels Laserstrahlen durch die Kontaktierungsöffnung 8 hindurch verbunden. Das Formteil 4 weist jeweils eine Öffnung für die Anschlussleitungen 6 und für die Leiterelemente 5 auf. Deren Ausgestaltung ist in den folgenden Abbildungen näher beschrieben. Nach dem Paarweisen Verbinden von Anschlussleitungen 2 und Leiterelementen 3 wird noch die Ummantelung der Mantelleitung mit der Kappe 9 verschweißt. Somit verbleibt das Formteil 4 vorzugsweise im gefertigten Messgerät.

In der Fig. 2 ist das Formteil 4, welches beispielsweise im Wesentlichen aus einer Keramik besteht, im Schnitt dargestellt. Die Leiterelemente 3 sind hier bereits durch die V-förmige Öffnungen zum Einführen des Leiterelements 6 des Formteils 4 verbogen. Die kegelförmigen Öffnungen zum Einführen der Anschlussleitung 5 des Formteils 4 erleichtern das Einbringen der beiden Anschlussleitungen 2. Die Anschlussleitungen 2 und die Leiterelemente 3 treffen sich dabei jeweils paarweise in einem Raumabschnitt 7 im Inneren des Formteils 4. Auf diesen Raumabschnitt 7 münden auch die zwei Kontaktierungsöffnungen 8 zur Erzeugung der mechanischen und elektrischen Verbindung.

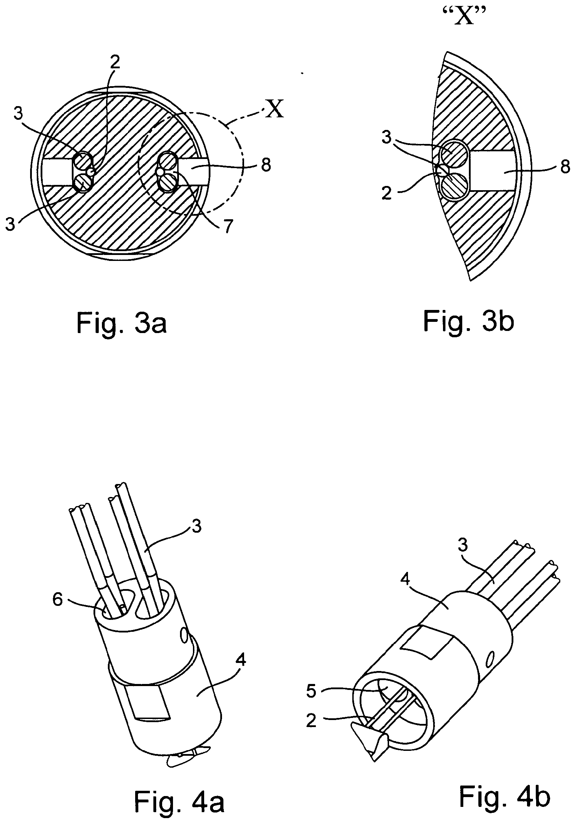

In den Fig. 3a und 3b sind ein Schnitt durch die Anordnung der Fig. 2 längs der Linie B-B und ein vergrößerter Ausschnitt X davon dargestellt. Zu sehen ist, wie die beiden gekrümmten Leiterelemente 3 jeweils in direkten Kontakt mit der Anschlussleitung 2 kommen. Zu beachten sind dabei auch die Größenverhältnisse. Zu sehen sind jeweils die Kontaktierungsöffnungen 8, welche jeweils in den Raumabschnitt 7 münden, in welchem sich die Leiterelemente 3 und die Anschlussleitungen 2 treffen.

In der Fig. 4a sind die Öffnungen 6 für die Einführung der Leiterelemente 3 mit ihrer V-förmigen Struktur gut zu erkennen. Durch diese V-Form werden die Leiterelemente passend geführt und dadurch in der Spitze des Vs umgebogen. Die Fig. 4b zeigt die beiden Öffnungen zum Einführen der Anschlussleitungen 5. Hier liegt ein kegelförmiger Aufbau vor, so dass die dünnen Anschlussleitungen leichter einzubringen sind.

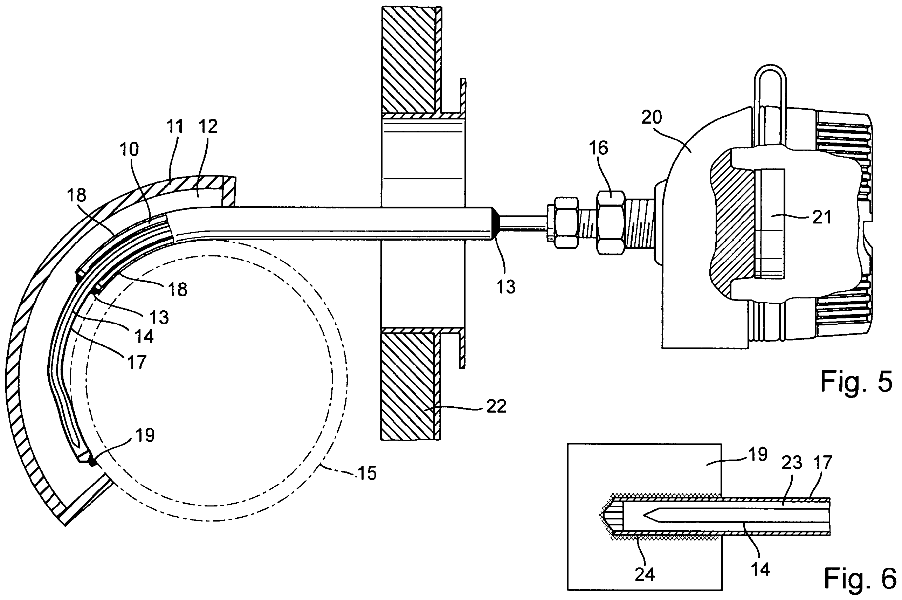

Figur 5 zeigt eine schematische Darstellung eines Mantelthermometers vor Ort an einer Messstelle, hier einem Hochofenrohr 15. Messvorrichtungen zur Bestimmung der Temperatur werden bspw. in Brenn- und/oder in Hochöfen, Prozessrohrleitungen oder in Heizkesseln und Erhitzern eingesetzt, die bspw. Heizöl als Heizmedium verwenden. Der Sensor bzw. die Sensoranordnung der Messvorrichtung kann dafür bspw. mediumsberührend sein oder an eine Wandung bspw. einer Rohrleitung 15 angebracht werden. Eine Messvorrichtung zur Temperaturbestimmung mittels eines sog. Mantelthermoelements ist u.a. aus der Patentschrift US 5,172,979 bekannt geworden. Darüber hinaus ist aus der Patentschrift US 4,871,263 ein Schutzrohr 18 für einen Temperatursensor bekannt geworden. Figur 5 zeigt eine Messvorrichtung bei der ein Mantelthermoelement an die äußere Wandung eines Hochofenrohres 15 angebracht ist. Das Mantelthermoelement besteht aus einem Thermoelementenpaar 14, welches Thermoelementenpaar 14 in eine elektrisch isolierende Schicht 17, bspw. verdichtetes MgO-Pulver, eingebettet ist. Das Thermoelementenpaar 14 besteht wie in Figur 5 gezeigt aus zwei Thermodrähten 14, welche prozessseitig an einer Messstelle bspw. an dem Hochofenrohr 15 angeschlossen sind. Das Mantelthermoelement wird bspw. mittels eines WIG-Schweißverfahrens an eine Schweißauflage 19 geschweißt. Die Schweißauflage 19 wiederum ist an dem Hochofenrohr 15 befestigt. An seinem anderen Ende ist das Mantelthermoelement mit einem Anschlussklemmenblock 21 eines Messumformers verbunden. Anschlussklemmenblock 21 und/oder Messumformer sind in einem Anschlusskopf 20 untergebracht. Der Anschlusskopf 20 ist mittels Pressverschraubung 16 an dem Mantelthermoelement fixiert. Bei den Thermodrähten 14 kann es sich um massive metallische Leiter aus Kupfer, Nickel, Nickelchrom o. ä. handeln. Falls die Thermodrähte 14 aufgrund von umgebungsseitigen Einflüssen Schaden nehmen könnten, werden sie wie aus dem Stand der Technik bekannt durch Metall- oder Keramikrohre 18 bspw. aus "Kanthal" geschützt. Ein solches Schutzrohr 18 kann bspw. durch Schweißen an dem Mantelthermoelement 20 befestigt werden. Dadurch kann das Austreten eines eventuell aggressiven Mediums durch das Schutzrohr 18 hindurch verhindert werden. Die Schweißnaht 13 bildet eine zusätzliche Dichtstufe gegenüber dem Prozessmedium in der (Hochofen-)Rohrleitung 15, so dass dieses nicht austreten kann. Das Schutzrohr 18 bildet eine erste Verteidigungslinie für den Fall, dass die Messanordnung in einer stark korrosiven Umgebung ausgesetzt ist.

Zusätzlich ist eine Keramikfaser 10 (auch als Kaolinwatte bekannt) zwischen der elektrisch isolierenden Schicht 17 und dem Schutzrohr 18 vorgesehen. Die Keramikfaser 10 bildet eine Hülse, welche auch als Isolation gegenüber einem metallischen Schutzrohr 18 dienen kann. Die Keramikfaser 10 bildet eine zweite Verteidigungslinie für die Thermodrähte 14 gegen ein unter Umständen stark aggressives Medium.

Die in Figur 5 gezeigte Messstelle zur Temperaturmessung am Hochofenrohr 15 ist von einem Hitzeschild 12 umgeben. Der Hitzeschild 12 dient dazu, das Einwirken von umgebungsseitigen Einflüssen auf das Thermoelement zu verhindern, die eine Verfälschung des Messsignals bzw. des Messwerts verursachen können. Die in eine elektrisch isolierende Schicht 17 eingebetteten Thermodrähte 14 sind, wie bereits erwähnt, von einer Hülse aus Keramikfaser 10 ummantelt. Die Keramikfaser 10 besteht dazu bevorzugt aus wenigstens 60% Al₂O₃ und aus wenigstens 20% SiO₂. Vorzugsweise besteht die Keramikfaser 10 zu annähernd 72% aus Al₂O₃ und zu annähernd 28% aus SiO₂. Durch die röhrenförmige Hülse aus Keramikfaser 10, welche die Thermodrähte 14 und die elektrisch isolierende Schicht ummantelt, wird eine erhöhte Hitzebeständigkeit des Mantelthermoelements erreicht. Die Keramikfaser 10 ist feuerfest und kann eine Hitzebeständigkeit von über 1000° C aufweisen. Die Thermodrähte 14 können auch von einer metallischen Schutzschicht 23 umgeben sein, die eine dritte Verteidigungslinie gegenüber dem Medium darstellt. Diese metallische Schutzschicht ist auf die elektrisch isolierende Schicht 17 aufgebracht. Insbesondere in dem Fall, dass das äußere Schutzrohr 18 beschädigt ist, dient die Hülse aus Keramikfaser 10 als Schutz für die Thermodrähte 14. Das Medium oder andere Einflüsse aus der Umgebung der Messvorrichtung werden mittels der Keramikfaser 10 von den Thermodrähten 14 abgehalten. Durch diese Vorkehrungen wird die Lebensdauer der Messvorrichtung erhöht und systematische Messfehler verhindert. Ein Schutzrohr 18 lediglich aus Metall hat sich in Feldtests dahingehend als unzureichend erwiesen. Das bspw. in einem Brennofen erhitzte Medium kann aufgrund der Keramikfaser 10 insbesondere bei einer Beschädigung des äußeren metallischen Schutzrohres 18 nicht bis auf die Thermodrähte 14 vordringen. Durch die filtrierende Wirkung der Keramikfaser 10 kann zudem das eindiffundieren bspw. des Mediums durch das Schutzrohr 18 und die elektrische isolierende Schicht 17 hindurch verhindert werden.

Ein zusätzlicher Schutz durch eine Ummantelung mittels einer Keramikfaser 10 gegen umgebungsseitige Einflüsse kann analog auch für die Leiterelemente 3 und/oder die Anschlussleitungen 2 erfolgen. Wie bereits erwähnt, kann ein Sensor mit Anschlussleitungen 2 über das Formteil 4 an die Leiterelemente 3 angeschlossen werden. Die Leiterelemente 3 und/oder die Anschlussleitungen 2 können dann zum Schutz vor umgebungsseitigen Störeinflüssen ebenso wie die Thermodrähte 14 mit der sie umgebenden elektrisch isolierenden Schicht von einer Hülse bestehend aus einer Keramikfaser 10 ummantelt sein. Dadurch wird eine Beeinflussung der über die Leiterelemente 3 bzw. Anschlussleitungen 2 übertragenen elektrischen Spannung bspw. durch Eindiffundieren verhindert und die Lebensdauer der Messeinrichtung erhöht.

Figur 6 zeigt die Schweißauflage 19 und die Thermodrähte 14, welche in eine elektrisch isolierende Schicht eingebettet 17 sind, welche elektrisch isolierende Schutzschicht 17 von einer metallischen Schutzschicht 23 umgeben ist in vergrößerter Darstellung.

### Bezugszeichenliste

- 1: Sensorelement
- 2: Anschlussleitung
- 3: Leiterelement
- 4: Formteil
- 5: Öffnung zum Einführen der Anschlussleitung
- 6: Öffnung zum Einführen des Leiterelements
- 7: Raumabschnitt
- 8: Kontaktierungsöffnung
- 9: Kappe
- 10: Keramikfaser
- 11: Hitzeschild
- 12: Zementverguss
- 13: Schweißnaht
- 14: Thermodrähte
- 15: (Hochofen-)Rohr
- 16: Pressverschraubung
- 17: Elektrisch isolierende Schicht
- 18: Schutzrohr
- 19: Schweißauflage
- 20: Anschlusskopf
- 21: Anschlussklemmblock/ Messumformer
- 22: Wand
- 23: Metallische Schutzschicht
- 24: Schweißung

## Patentansprüche

1. Temperatur-Messgerät, vorzugsweise Thermometer-Messeinsatz,
mit mindestens einem Sensorelement (1), welches mit mindestens einer Anschlussleitung (2) verbunden ist,
und
mit mindestens einem Leiterelement (3) einer Mantelleitung, welches Leiterelement mit der Anschlussleitung (2) verbunden ist,
wobei sich das Sensorelement (1), das zur Messung der Temperatur dient, indem ein temperaturabhängiger Widerstand des Sensorelements (1) ausgewertet wird, in einer Kappe befindet, und
wobei die Sensorkappe mit einer Ummantelung des Leiterelements (3) der Mantelleitung verschweißt ist,
**dadurch gekennzeichnet, dass**
mindestens ein Formteil (4) vorgesehen ist, das zumindest teilweise aus einer Keramik besteht und im Wesentlichen zylindrisch ausgestaltet ist,
in dem Formteil (4) mindestens eine Öffnung (5) zum Einführen der Anschlussleitung (2) vorgesehen ist,
in dem Formteil (4) mindestens eine Öffnung (6) zum Einführen des Leiterelements (3) vorgesehen ist, und
in dem Formteil (4) mindestens ein Raumabschnitt (7) vorgesehen ist, auf welchen die Öffnung (5) zum Einführen der Anschlussleitung (2) und die Öffnung (6) zum Einführen des Leiterelements (3) münden,
wobei die mindestens eine Anschlussleitung (2) und das mindestens eine Leiterelement (3) sich in dem Raumabschnitt (7) treffen, und elektrisch und mechanisch verbunden sind.

2. Vorrichtung nach Anspruch 1,
**dadurch gekennzeichnet,**
**dass** die Öffnung (5) zum Einführen der Anschlussleitung (2) im Wesentlichen kegelförmig ausgestaltet ist, wobei die Spitze des Kegels im Raumabschnitt (7) mündet.

3. Vorrichtung nach Anspruch 1 oder 2,
**dadurch gekennzeichnet,**
**dass** die Öffnung (6) zum Einführen des Leiterelements (3) im Wesentlichen V-förmig ausgestaltet ist, wobei die Spitze des Vs im Raumabschnitt (7) mündet.

4. Vorrichtung nach einem der Ansprüche 1 bis 3,
**dadurch gekennzeichnet,**
**dass** das Formteil (4) mindestens eine Kontaktierungsöffnung (8) aufweist, welche auf den Raumabschnitt (7) mündet und durch welche hindurch das Anschlusselement (2) und das Leiterelement (3), insbesondere durch Laserschweißen, miteinander verbindbar sind.

5. Vorrichtung nach dem Anspruch 4, **dadurch gekennzeichnet,**
**dass** es sich bei der Kontaktierungsöffnung (8) um eine Bohrung handelt, welcher von einer Außenfläche des Formteils (4) bis in den Raumabschnitt (7) reicht.

6. Vorrichtung nach einem der Ansprüche 1 bis 5,
**dadurch gekennzeichnet,**
**dass** das Leiterelement (3) ein ein- oder mehradriges mineralisoliertes Kabel ist.

7. Vorrichtung nach einem der Ansprüche 1 bis 6,
**dadurch gekennzeichnet, dass** die Anschlussleitung (2) und/oder das Leiterelement (3) wenigstens abschnittsweise mit einer Keramikfaser (10) ummantelt ist.

8. Vorrichtung nach Anspruch 7,
**dadurch gekennzeichnet,**
**dass** das Leiterelement (3) zumindest teilweise von der Ummantelung freigelegt ist.

9. Vorrichtung nach einem der Ansprüche 1 bis 8,
**dadurch gekennzeichnet,**
**dass** die Anschlussleitung (2) ein Draht ist.

10. Vorrichtung nach einem der Ansprüche 1 bis 9,
**dadurch gekennzeichnet,**
**dass** das Sensorelement (1) zumindest teilweise in einer Vergussmasse eingebettet ist.

11. Verfahren zur Fertigung eines Temperaturmessgerätes gemäß einem der Ansprüche 1-10, umfassend zumindest die drei folgenden Arbeitsschritte:
Erzeugen von Sensormodulen, bei welchen Sensormodulen Stahlkappen mit einem Keramikverguss definiert ausgefüllt werden, in welchem Keramikverguss ein RTD-Sensorelement eingebettet ist und dieses fest umschließt,
Erzeugen einer elektrischen und mechanischen Kopplung der RTD-Anschlussdrähte mit den freigelegten Leiterenden einer Mantelleitung mit Hilfe eines Keramikformteils durch Laserverschweißung, und
Verschweißen der Sensorkappe mit dem äußeren Mantel der Mantelleitung.

## Claims

1. Temperature measuring device, preferably a thermometer measuring insert, with at least one sensor element (1), which is connected to at least one connecting cable (2),
and
with at least one conductor element (3) of a sheathed cable, said conductor element being connected to the connecting cable (2),
wherein the sensor element (1), which serves to measure the temperature by evaluating a temperature-dependent resistance of the sensor element (1), is located in a cap, and
wherein the sensor cap is welded to a sheathing of the conductor element (3) of the sheathed cable,
**characterized in that**
at least one molded part (4) is provided, which consists at least in part of a ceramic and is essentially cylindrical in design,
wherein at least one opening (5) for the introduction of the connecting cable (2) is provided in said molded part (4),
wherein at least one opening (6) for the introduction of the conductor element (3) is provided in said molded part (4), and
wherein at least one space (7) into which the opening (5) for the introduction of the connecting cable (2) and the opening (6) for the introduction of the conductor element (3) enter is provided in said molded part (4),
wherein the at least one connecting cable (2) and the at least one conductor element (3) meet in the space (7) and are electrically and mechanically connected.

2. Apparatus as claimed in Claim 1,
**characterized in that**
the opening (5) provided for the introduction of the connecting cable (2) is essentially conical, wherein the tip of the cone enters into the space (7).

3. Apparatus as claimed in Claim 1 or 2,
**characterized in that**
the opening (6) provided for the introduction of the conductor element (3) is essentially V-shaped, wherein the tip of the V enters into the space (7).

4. Apparatus as claimed in one of the Claims 1 to 3,
**characterized in that**
the molded part (4) has at least one contact opening (8), which enters into the space (7) and through which the connection element (2) and the conductor element (3) can be connected to one another, particularly via laser welding.

5. Apparatus as claimed in Claim 4,
**characterized in that**
the contact opening (8) is a borehole that extends from an outer surface of the molded part (4) into the space (7).

6. Apparatus as claimed in one of the Claims 1 to 5,
**characterized in that**
the conductor element (3) is a single-core or multi-core mineral-insulated cable.

7. Apparatus as claimed in one of the Claims 1 to 6,
**characterized in that**
the connecting cable (2) and/or the conductor element (3) is/are at least partially coated with a ceramic fiber (10).

8. Apparatus as claimed in Claim 7,
**characterized in that**
the conductor element (3) is at least partially not covered by the sheathing.

9. Apparatus as claimed in one of the Claims 1 to 8,
**characterized in that**
the connecting cable (2) is a wire.

10. Apparatus as claimed in one of the Claims 1 to 9,
**characterized in that**
the sensor element (1) is at least partially embedded in a potting compound.

11. Procedure for producing a temperature measuring device as claimed in one of the Claims 1 to 10, comprising at least the following three steps:
Creation of sensor modules wherein in the case of said sensor modules steel caps are filled in a defined manner with a ceramic potting compound in which an RTD sensor element is embedded, enclosing said sensor element firmly,
Creation of an electrical and mechanical coupling of the RTD connection wires with the exposed wire ends of the sheathed cable by laser welding using a ceramic molded part, and
Welding of the sensor cap with the outer sheath of the sheathed cable.

## Revendications

1. Appareil de mesure de température, de préférence un insert de mesure pour thermomètre avec au moins un élément capteur (1), lequel est relié avec au moins un câble de raccordement (2),
et
avec
au moins un élément conducteur (3) d'un câble sous gaine, lequel élément conducteur est relié avec la câble de raccordement (2),
pour lequel l'élément de capteur (1), qui sert à la mesure de la température en ce qu'est exploitée une résistance - fonction de la température - de l'élément de capteur, se trouve dans un capuchon, et
pour lequel le capuchon de capteur est soudé avec une gaine de l'élément conducteur (3) du câble sous gaine,
**caractérisé**
**en ce qu'**est prévue au moins une pièce moulée (4), qui est constituée au moins partiellement d'une céramique et est pour l'essentiel de forme cylindrique, pièce moulée (4) dans laquelle est prévue une ouverture (5) pour l'introduction du câble de raccordement (5),
pièce moulée (4) dans laquelle est prévue une ouverture (6) pour l'introduction de l'élément conducteur (3), et
pièce moulée (4) dans laquelle est prévu un espace (7), dans lequel débouchent l'ouverture (5) pour l'introduction du câble de raccordement (2) et l'ouverture (6) pour l'introduction de l'élément conducteur (3),
l'au moins un câble de raccordement (2) et l'au moins un élément conducteur (3) se rejoignant dans l'espace (7), où ils sont reliés électriquement et
mécan iquement.

2. Dispositif selon la revendication 1,
**caractérisé**
**en ce que** l'ouverture (5) prévue pour l'introduction du câble de raccordement (2) est pour l'essentiel conique, le sommet du cône débouchant dans l'espace (7).

3. Dispositif selon la revendication 1 ou 2,
**caractérisé**
**en ce que** l'ouverture (6) prévue pour l'introduction de l'élément conducteur (3) est conçue pour l'essentiel en forme de V, la pointe du V débouchant dans l'espace (7).

4. Dispositif selon l'une des revendications 1 à 3,
**caractérisé**
**en ce que** la pièce moulée (4) présente au moins une ouverture de contact (8), laquelle débouche dans l'espace (7) et à travers laquelle le câble de raccordement (2) et l'élément conducteur (3) peuvent être reliés entre eux, notamment au moyen d'un soudage laser.

5. Dispositif selon la revendication 4,
**caractérisé**
**en ce que** concernant l'ouverture de contact (8), il s'agit d'un perçage, lequel s'étend de la surface extérieure de la pièce moulée (4) jusque dans l'espace (7).

6. Dispositif selon l'une des revendications 1 à 5,
**caractérisé**
**en ce que** l'élément conducteur (3) est un câble monobrin ou multibrin à isolation minérale.

7. Dispositif selon l'une des revendications 1 à 6,
**caractérisé**
**en ce que** le câble de raccordement (2) et/ou l'élément conducteur (3) est/sont gainé(s) au moins partiellement au moyen d'une fibre de céramique (10).

8. Dispositif selon la revendication 7,
**caractérisé**
**en ce que** l'élément conducteur (3) n'est au moins partiellement pas recouvert par la gaine.

9. Dispositif selon l'une des revendications 1 à 8,
**caractérisé**
**en ce que** le câble de raccordement (2) est un fil.

10. Dispositif selon l'une des revendications 1 à 9,
**caractérisé**
**en ce que** l'élément capteur (1) est enrobé au moins partiellement dans une masse de remplissage.

11. Procédé destiné à la fabrication d'un appareil de mesure de température selon l'une des revendications 1 à 10, comprenant au moins les trois étapes de travail suivantes :
Confection de modules capteur, pour lesquels des capuchons en acier sont remplis de façon définie avec une masse de céramique dans laquelle est enrobé un élément capteur RTD, et qui entoure fermement celui-ci,
Confection par soudage laser d'un couplage électrique et mécanique des fils de raccordement RTD avec les extrémités de conducteur à nu d'un câble sous gaine à l'aide d'une pièce moulée en céramique, et
Soudage du capuchon de capteur avec la gaine extérieure du câble sous gaine.
